# EUROPÄISCHE PATENTSCHRIFT

(11) **EP 2 066 883 B1**
(45) Veröffentlichungstag und Bekanntmachung des Hinweises auf die Patenterteilung: **07.07.2010**
(21) Anmeldenummer: 07803417.0
(22) Anmeldetag: 12.09.2007
(51) Int. Cl.: F01N 3/20, F01N 9/00

(54) **VERFAHREN ZUM BETREIBEN EINES REAGENZMITTEL-DOSIERVENTILS UND VORRICHTUNG ZUR DURCHFÜHRUNG DES VERFAHRENS**
METHOD FOR OPERATING A REAGENT METERING VALVE AND APPARATUS FOR CARRYING OUT THE METHOD
PROCÉDÉ DE FONCTIONNEMENT D'UNE SOUPAPE DE DOSAGE D'AGENT CHIMIQUE ET DISPOSITIF DE RÉALISATION DU PROCÉDÉ

(30) Priorität: 20.09.2006 DE 102006044080
(43) Veröffentlichungstag der Anmeldung: 10.06.2009
(73) Patentinhaber: Robert Bosch GmbH, 70442 Stuttgart (DE)
(72) Erfinder: KLEINKNECHT, Horst, 74427 Fichtenberg (DE)
(86) Internationale Anmeldenummer: PCT/EP2007/059553
(87) Internationale Veröffentlichungsnummer: WO 2008/034747

(56) Entgegenhaltungen:
- EP-A- 0 849 443
- EP-A- 1 291 498
- EP-A- 1 672 191
- DE-A1- 3 426 799
- DE-A1- 19 903 439
- DE-A1-102005 022 562
- US-A1- 2005 235 632

## Beschreibung

### Stand der Technik

Die Erfindung geht aus von einem Verfahren zum Betreiben eines Reagenzmittel-Dosierventils, welches ein Reagenzmittel in den Abgasbereich einer Brennkraftmaschine dosiert, und von einer Vorrichtung zur Durchführung des Verfahrens nach der Gattung der unabhängigen Ansprüche.

Gegenstand der vorliegenden Erfindung sind auch ein Computerprogramm sowie ein Computerprogrammprodukt.

In der DE 199 03 439 A1 sind ein Verfahren und eine Vorrichtung zum Betreiben einer Brennkraftmaschine beschrieben, in deren Abgasbereich ein SCR-Katalysator (Selective-Catalytic-Reduction) angeordnet ist, der die im Abgas der Brennkraftmaschine enthaltenen Stickoxide mit einem Reagenzmittel zu Stickstoff reduziert. Die Dosierung des Reagenzmittels bzw. einer Vorstufe des Reagenzmittels erfolgt vorzugsweise in Abhängigkeit von Kenngrößen der Brennkraftmaschine, wie beispielsweise der Drehzahl und der eingespritzten Kraftstoffmenge. Weiterhin erfolgt die Dosierung vorzugsweise in Abhängigkeit von Abgas-Kenngrößen, wie beispielsweise der Abgastemperatur oder der Betriebstemperatur des SCR-Katalysators.

Als Reagenzmittel ist beispielsweise das Reduktionsmittel Ammoniak vorgesehen, das aus einer Harnstoff-Wasser-Lösung als Vorstufe des Reagenzmittels gewonnen werden kann. Die Dosierung des Reagenzmittels oder der Vorstufe muss sorgfältig festgelegt werden. Eine zu geringe Dosierung hat zur Folge, dass Stickoxide im SCR-Katalysator nicht mehr vollständig reduziert werden können. Eine zu hohe Dosierung führt zu einem Reagenzmittelschlupf, der einerseits einem unnötig hohen Reagenzmittelverbrauch und andererseits, in Abhängigkeit von der Beschaffenheit des Reagenzmittels, zu einer unangenehmen Geruchsbelästigung führen kann.

Die Festlegung der Reagenzmittelrate bzw. der Reagenzmittel-Dosiermenge kann gemäß der EP 1 024 254 A2, ausgehend von einer Betriebsgröße der Brennkraftmaschine, beispielsweise der Kraftstoff-Einspritzmenge und/oder der Drehzahl und gegebenenfalls wenigstens einer Kenngröße des Abgases, beispielsweise der Abgastemperatur, erfolgen.

In der DE 196 36 507 A1 ist ein Verfahren zur Steuerung einer Brennkraftmaschine beschrieben, bei dem wenigstens eine Kraftstoff-Nacheinspritzung vorgesehen ist, welche oxidierbare Abgas-Bestandteile in den Abgasbereich der Brennkraftmaschine einbringt, die im Abgasbereich exotherm reagieren sollen, um die Abgastemperatur zu erhöhen bzw. wenigstens ein Bauteil zu erwärmen. Falls nur eine geringe Kraftstoffmenge im Rahmen der Kraftstoff-Nacheinspritzung eingespritzt werden soll, die vom Kraftstoff-Einspritzventil nicht mehr dargestellt werden kann, ist vorgesehen, dass nur bei jeder n-ten Kraftstoff-Zumessung eine Kraftstoff-Nacheinspritzung erfolgt.

In der DE 103 01 821 A1 ist ein Verfahren zur Ansteuerung eines Elektromotors mit einem impulsbreitenmodulierten Signal beschrieben, das eine vorgegebene Periodendauer und ein bestimmtes Tastverhältnis aufweist, welches die Leistung oder die Drehzahl des Motors bestimmt. Die Periodendauer des impulsbreitenmodulierten Signals wird in Abhängigkeit vom Tastverhältnis verändert. Dadurch wird sichergestellt, dass für jedes mögliche Tastverhältnis die Periodendauer derart ausgewählt wird, dass Anforderungen hinsichtlich der Verlustleistung und Anforderungen hinsichtlich der leitungsgebundenen Störungen eingehalten werden.

In der EP 840 430 A1 ist ein Servoantrieb beschrieben, der mit einem 3-phasigen impulsbreitenmodulierten Signal angesteuert wird. Vorgesehen sind Totzeiten zwischen der Einschaltzeit und der Ausschaltzeit, wobei die Totzeiten variabel sind, sodass eine Änderung der Einschaltzeit bei fest vorgegebener Periodendauer nicht in allen Betriebszuständen eine entsprechende Änderung der Ausschaltdauer zur Folge hat. Dadurch kann ein höher aufgelöstes Tastverhältnis bei einer fest vorgegebenen Periodendauer des impulsbreitenmodulierten Signals erreicht werden.

In der DE 37 10 467 C1 ist ein Kraftstoff-Einspritzventil beschrieben, welches einen von einem Elektromagneten umgebenen Kern sowie einen mit dem Kern zusammenwirkenden Anker enthält, der mit einer Ventilnadel fest verbunden ist. Beim Einschalten des Elektromagneten zieht der Elektromagnet den Anker an und gibt dadurch eine Öffnung zur Dosierung des unter Druck stehenden Kraftstoffs solange frei, bis der Elektromagnet abgeschaltet wird.

Die DE 34 26 799 C2 beschreibt ein Verfahren zum Ermitteln des Öffnungs-Zeitpunkts eines Magnetventils, ab welchem das Magnetventil vollständig geöffnet ist. Der Öffnungs-Zeitpunkt wird anhand der Induktivitäts-Änderung ermittelt, die sich aufgrund der Anzugsbewegung der mit dem Anker des Elektromagneten fest verbundenen Ventilnadel nach dem Einschalten des Elektromagneten durch eine Änderung der geometrischen Verhältnisse ergibt.

Der Erfindung liegt die Aufgabe zugrunde, ein Verfahren zum Betreiben eines Dosierventils, welches ein Reagenzmittel oder eine Vorstufe des Reagenzmittels in den Abgasbereich einer Brennkraftmaschine dosiert, und eine Vorrichtung zur Durchführung des Verfahrens anzugeben, die eine möglichst exakte Dosierung insbesondere bei geringen Dosiermengen bzw. Dosierraten ermöglichen.

### Offenbarung der Erfindung

Die erfindungsgemäße Vorgehensweise mit den Merkmalen des unabhängigen Verfahrensanspruchs weist den Vorteil auf, dass bei jeder vorgegebenen Dosiermenge bzw. Dosierrate, die in einem sehr großen Bereich festgelegt werden kann, stets sichergestellt ist, dass ein korrekter Sprühnebel entsteht. Dadurch wird eine exakte Dosierung eines Reagenzmittels bzw. Vorstufe des Reagenzmittels sichergestellt, welches ein im Abgasbereich angeordneter Katalysator zur Konvertierung des im Abgas enthaltenen NOx entweder unmittelbar oder nach einer Konvertierung in ein für den Katalysator direkt geeignetes Reagenzmittel benötigt. Insbesondere wird durch die erfindungsgemäße Vorgehensweise ein Auskristallisieren des Reagenzmittels vermieden, welches ein Dosierventil zusetzen kann, insbesondere, wenn es sich bei der Vorstufe des Reagenzmittels um eine Harnstoff-Wasser-Lösung handelt.

Vorteilhafte Weiterbildungen und Ausgestaltungen der erfindungsgemäßen Vorgehensweise ergeben sich aus abhängigen Ansprüchen.

Vorteilhafte Ausgestaltungen betreffen die Berücksichtigung von Größen, in Abhängigkeit von denen die minimale Öffnungsdauer des Dosierventils festgelegt wird. Die minimale Öffnungsdauer kann in Abhängigkeit vom Druck des Reagenzmittels und/oder vom Abgasgegendruck festgelegt werden. Weiterhin kann vorgesehen sein, dass die minimale Öffnungsdauer in Abhängigkeit von der Betriebspannung des Elektromagneten des Dosierventils festgelegt wird. Darüber hinaus kann alternativ oder zusätzlich vorgesehen sein, dass die minimale Öffnungsdauer in Abhängigkeit von einem Maß für die Abgastemperatur und/oder einem Maß für den Abgas-Massenstrom und/oder einem Maß für die Betriebstemperatur des Dosierventils und/oder des Reagenzmittels festgelegt wird.

Eine andere Ausgestaltung sieht vor, dass der Zustand, bei welchem das Dosierventil vollständig geöffnet ist, anhand einer Induktivitäts-Änderung beim Öffnungsvorgang des von einem Elektromagneten betätigten Dosierventils ermittelt wird. Dadurch kann die minimale Öffnungsdauer exakt festgelegt werden. Die Induktivitäts-Änderung kann in einfacher Weise aus dem gemessenen Strom ermittelt werden, der durch den Elektromagneten fließt.

Die erfindungsgemäße Vorrichtung zur Durchführung des Verfahrens betrifft zunächst ein Steuergerät, das zur Durchführung des Verfahrens speziell hergerichtet ist.

Eine besonders vorteilhafte Ausgestaltung der erfindungsgemäßen Vorrichtung sieht vor, dass als Dosierventil ein aus dem Stand der Technik bekanntes Benzin-Einspritzventil eingesetzt ist, welches aufgrund der Massenfertigung äußerst preiswert ist.

Eine andere Ausgestaltung sieht vor, dass zur Dosierung eine Harnstoff-Wasser-Lösung als Vorstufe des Reagenzmittels vorgesehen ist.

Das Steuergerät enthält vorzugsweise wenigstens einen elektrischen Speicher, in welchem die Verfahrensschritte als Computerprogramm abgelegt sind.

Das erfindungsgemäße Computerprogramm sieht vor, dass alle Schritte des erfindungsgemäßen Verfahrens ausgeführt werden, wenn es auf einem Computer abläuft.

Das erfindungsgemäße Computerprogrammprodukt mit einem auf einem maschinenlesbaren Träger gespeicherten Programmcode führt das erfindungsgemäße Verfahren aus, wenn das Programm auf einem Computer oder im Steuergerät ausgeführt wird.

Weitere vorteilhafte Weiterbildungen und Ausgestaltungen der erfindungsgemäßen Vorgehensweise ergeben sich aus weiteren abhängigen Ansprüchen. Ein Ausführungsbeispiel der Erfindung ist in der Zeichnung dargestellt und in der nachfolgenden Beschreibung näher erläutert.

Es zeigen:
- Figur 1: ein technisches Umfeld, in welchem ein erfindungsgemäßes Verfahren abläuft und
- Figur 2: eine Dosierventil- Öffnungsdauer und ein impulsbreitenmoduliertes Dosiersignal.

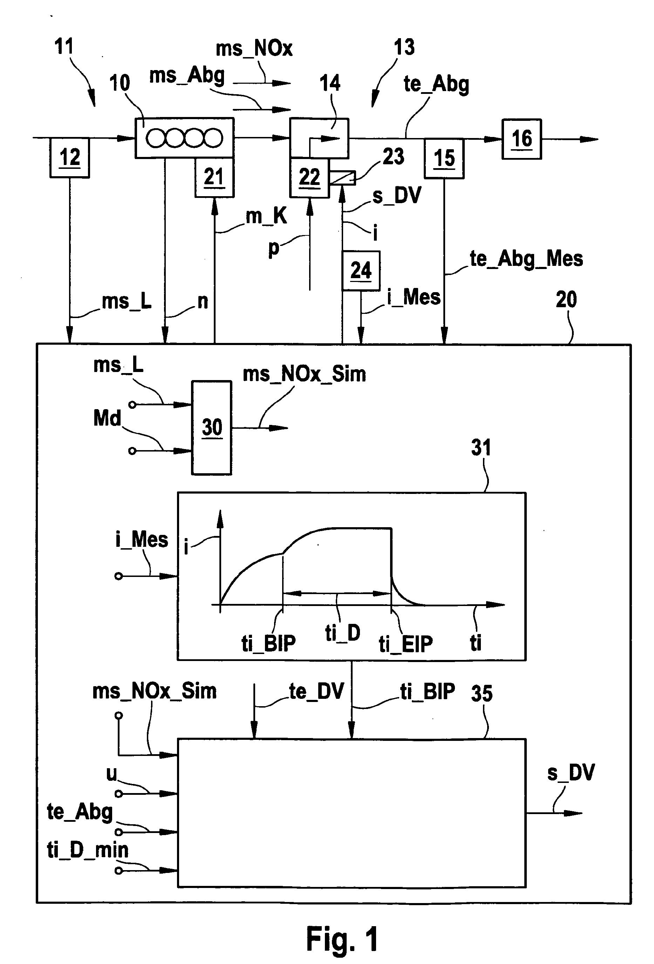

Figur 1 zeigt eine Brennkraftmaschine 10, in deren Ansaugbereich 11 ein Luftsensor 12 und in deren Abgasbereich 13, in welchem ein NOx-Massenstrom ms_NOx, ein Abgas-Massenstrom ms_Abg und eine Abgastemperatur te_Abg auftreten, eine Dosiervorrichtung 14, ein Abgastemperatur-Sensor 15 sowie ein Katalysator 16 angeordnet sind.

Der Luftsensor 12 stellt einem Steuergerät 20 ein Luftsignal ms_L, die Brennkraftmaschine 10 eine Drehzahl n und der Abgas-Temperatursensor 15 eine gemessene Abgastemperatur te_Abg_Mes zur Verfügung. Das Steuergerät 20 stellt einer Kraftstoff-Zumessvorrichtung 21 ein Kraftstoffsignal m_K zur Verfügung.

Der Dosiervorrichtung 14 ist ein Dosierventil 22 zugeordnet, das von einem Elektromagneten 23 betätigt wird. Das Dosierventil 22 wird mit einem vom Steuergerät 20 bereitgestelltem Dosiersignal s_DV beaufschlagt, welches den Elektromagneten 23 betätigt. Der durch den Elektromagneten 23 fließende Strom i wird von einem Stromsensor 24 erfasst und als gemessener Strom i_Mes dem Steuergerät 20 zur Verfügung gestellt. Das zu dosierende Reagenzmittel bzw. die Vorstufe des Reagenzmittels weist einen Betriebsdruck p auf.

Das Steuergerät 20 enthält eine NOx-Massenstrom-Ermittlung 30, welcher das Luftsignal ms_L sowie ein Maß Md für die Last der Brennkraftmaschine 10 zur Verfügung gestellt werden und welche einen berechneten NOx-Massenstrom ms_NOx_Sim bereitstellt.

Das Steuergerät 20 enthält weiterhin eine Ventilnadel-Positionsermittlung 31, welche aus dem gemessenen Strom i_Mes den Dosierventil-Öffnungszeitpunkt ti_BIP sowie den Dosierventil-Schließzeitpunktti_EIP ermittelt. Zwischen dem Dosierventil-Öffnungszeitpunkt ti_BIP und dem Dosierventil-Schließzeitpunkt ti_EIP liegt die Dosierventil-Öffnungsdauer ti_D.

Die Ventilnadel-Positionsermittlung 31 stellt einer Dosiersignal-Ermittlung 35 den Dosierventil-Öffnungszeitpunkt ti_BIP zur Verfügung. Der Dosiersignal-Ermittlung 35 werden weiterhin der berechnete NOx-Massenstrom ms_NOx_Sim, die Dosierventil-Betriebstemperatur te_DV, die Elektromagnet-Betriebsspannung u, die Abgastemperatur te_Abg sowie eine vorgegebene minimale Dosierventil-Öffnungsdauer ti_D_min zur Verfügung gestellt. Ermittelt wird daraus das Dosiersignal s_DV.

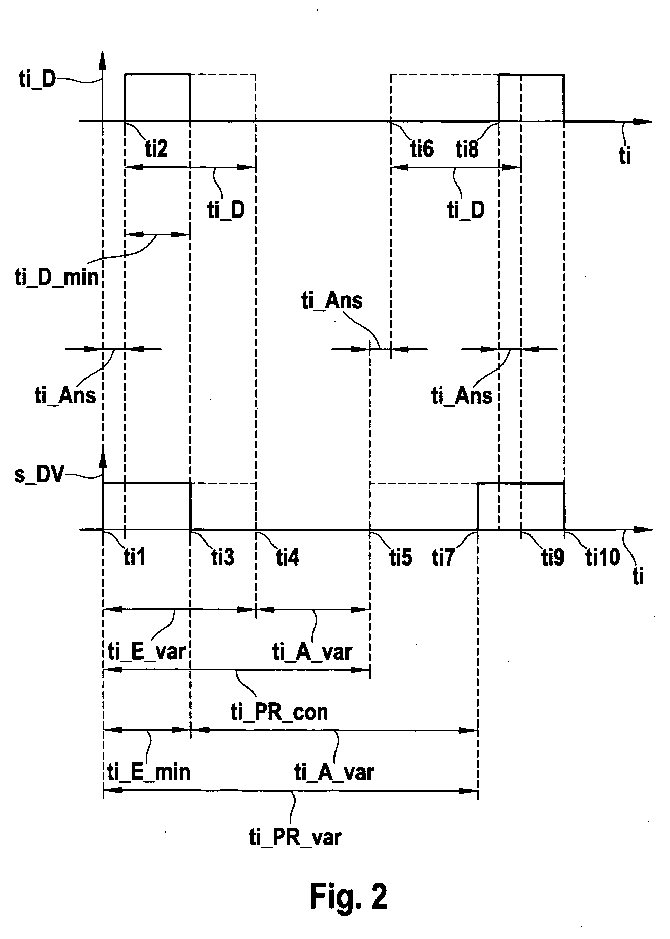

Die Dosiersignal-Ermittlung 35 stellt das Dosiersignal s_DV als impulsbreitenmoduliertes Signal zur Verfügung, das im Rahmen der folgenden Funktionsbeschreibung anhand von Figur 2 näher erläutert wird:

Beim Betreiben der Brennkraftmaschine 10 kann insbesondere in Abhängigkeit vom Maß Md für die Last der Brennkraftmaschine 10 ein NOx-Massenstrom ms_NOx im Abgasbereich 13 auftreten, der aufgrund gesetzlicher Vorschriften ein vorgegebenes Maß nicht übersteigen darf. Gleichbedeutend mit einem NOx-Massenstrom ms_NOx ist das Integral des NOx-Massenstroms ms_NOx, welches die NOx-Masse bezogen auf die Zeit oder insbesondere bezogen auf eine Fahrstrecke widerspiegelt, sofern die Brennkraftmaschine 10 als Antriebsmotor in einem Kraftfahrzeug eingesetzt ist.

Das Maß Md für die Last der Brennkraftmaschine 10 kann beispielsweise aus einer Position eines nicht näher gezeigten Fahrpedals gewonnen werden. Das Maß Md für die Last der Brennkraftmaschine 10 spiegelt sich beispielsweise auch im Kraftstoffsignal m_K wieder, welches wenigstens einen Kraftstoff-Einspritzzeitpunkt während eines Zyklus der Brennkraftmaschine 10 sowie die zuzumessende Menge der Kraftstoff-Zumessvorrichtung 21 festlegt. Im gezeigten Ausführungsbeispiel wird davon ausgegangen, dass der NOx-Massenstrom ms_NOx von der NOx-Massenstrom-Ermittlung 30 anhand des vom Luftsensor 12 bereitgestellten Luftsignals ms_L und dem Maß Md für die Last der Brennkraftmaschine 10 den berechneten NOx-Massenstrom ms_NOx_Sim bereitstellt.

Das im Abgas enthaltene NOx soll im Katalysator 16 soweit wie möglich konvertiert werden. Im gezeigten Ausführungsbeispiel wird davon ausgegangen, dass als Katalysator 16 ein SCR-Katalysator vorgesehen ist, der zur Durchführung der NOx-Konvertierung das mit der Dosiervorrichtung 14 in den Abgasbereich 13 einzubringende Reagenzmittel bzw. die Vorstufe des Reagenzmittels des im SCR-Katalysator 16 effektiv wirkenden Reagenzmittels benötigt.

Im Ausführungsbeispiel wird davon ausgegangen, dass als Vorstufe des Reagenzmittels eine Harnstoff-Wasser-Lösung unmittelbar in den Abgasbereich 13 eingesprüht wird, wobei dort durch Thermolyse Ammoniak gebildet wird, welches der SCR-Katalysator 16 als Reagenzmittel verwenden kann.

Das Reagenzmittel kann vom Dosierventil 22 unmittelbar in den Abgasbereich 13 gesprüht werden. In diesem Fall ist die Dosiervorrichtung 14 bis auf beispielsweise einen Montageflansch identisch mit dem Dosierventil 22. Alternativ kann vorgesehen sein, dass die Dosiervorrichtung 14 ein Sprührohr enthält und dass das Dosierventil 22 nicht unmittelbar an einem Abgasrohr oder dessen Nähe angebracht ist.

Das Dosierventil 22 wird vom Elektromagneten 23 betätigt. Eine möglichst kostengünstige Realisierung des Dosierventils 22 sieht vor, dass als Dosierventil 22 ein herkömmliches Benzin-Einspritzventil herangezogen wird, das aufgrund der Massenfertigung äußerst preiswert ist.

Eine einfache Realisierung des Dosierventils 22 sieht vor, dass der Elektromagnet 23 im eingeschalteten Zustand einen Anker anzieht, der fest mit einer Ventilnadel verbunden ist, die im angezogenen Zustand des Ankers eine oder mehrere Öffnungen freigibt, aus welchen das unter dem Betriebsdruck p stehende Reagenzmittel abgesprüht wird.

Der Elektromagnet 23 wird mit dem impulsbreitenmodulierten Dosiersignal s_DV angesteuert, das im unteren Teil von Figur 2 näher gezeigt ist. Vorgesehen ist ein impulsbreitenmoduliertes Signal, welches zunächst vorzugsweise eine fest vorgegebene Periodendauer ti_PR_con aufweist, die zum ersten Zeitpunkt ti1 beginnt und zum fünften Zeitpunkt ti5 endet. Die variable Einschaltdauer ti_E_var, die zwischen dem ersten Zeitpunkt ti1 und dem vierten Zeitpunkt ti4 liegt, bestimmt die Einschaltdauer ti_E_var des Elektromagneten 23. Die variable Einschaltdauer ti_E_var beginnt wieder zum fünften Zeitpunkt ti5 und endet zum neunten Zeitpunkt ti9.

Zumindest während eines Teils der Einschaltdauer ti_E_var tritt die Öffnungsdauer ti_D des Dosierventils 22 auf. In der nachfolgenden Ausschaltdauer ti_A_var, die zwischen dem vierten Zeitpunkt ti4 und dem fünften Zeitpunkt ti5 liegt, ist der Elektromagnet 23 abgeschaltet und das Dosierventil 22 geschlossen. Die nächste Öffnungsdauer ti_D tritt zum sechsten Zeitpunkt ti6 auf und endet zum neunten Zeitpunkt ti9. Im Folgenden wird davon ausgegangen, dass der Abschaltzeitpunkt ti_EIP des Elektromagneten 23 wenigstens näherungsweise mit dem Schließzeitpunkt des Dosierventils 22 zusammenfällt.

Gegenüber einer herkömmlichen Benzin-Einspritzung dosiert das vorzugsweise als Benzin-Einspritzventil realisierte Dosierventil 22 bei der vorliegenden Anwendung eine erheblich geringere Flüssigkeitsmenge bezogen auf die Zeit bzw. eine Fahrstrecke. Während bei der Benzin-Einspritzung von einer Menge von beispielsweise 5 - 15 Litern/100 km ausgegangen wird, kann bei der Reagenzmittel-Dosierung von einem Verbrauch von beispielsweise nahezu null bis 2 Litern/1000 km ausgegangen werden.

Das Tastverhältnis des impulsbreitenmodulierten Signals, welches als Einschaltdauer ti_E_var/Ausschaltdauer ti_A_var definiert werden kann, variiert daher in einem entsprechend großen Bereich.

Anhand von Versuchen wurde festgestellt, dass unterhalb einer bestimmten Öffnungsdauer ti_D des Dosierventils 22 das Reagenzmittel, beispielsweise die Vorstufe Harnstoff-Wasser-Lösung, nicht mehr als Sprühnebel abgesprüht wird. Stattdessen entstehen Tröpfchen, die teilweise am Dosierventil 22 verbleiben oder als ein unvollständiger Sprühnebel oder insbesondere Tröpfchen in den Abgasbereich 13 gelangen.

Durch die Tröpfchenbildung tritt einerseits ein Verlust von Reagenzmittel auf und andererseits wurde festgestellt, dass beispielsweise eine Harnstoff-Wasser-Lösung auskristallisiert. Die Kristallisation beeinflusst die geometrischen Verhältnisse am Dosierventil 22 und kann die Fähigkeit zur Ausbildung eines Sprühnebels verschlechtern. Im Extremfall kann die Kristallisation zu einem Zusetzen des Dosierventils 22 führen.

Anhand von Versuchen wurde festgestellt, dass mit einer Begrenzung der Öffnungsdauer ti_D des Dosierventils 22 auf die minimale Öffnungsdauer ti_D_min dafür gesorgt werden kann, dass bei jedem Dosiervorgang während der Öffnungsdauer ti_D ein korrekter Sprühnebel ausgebildet wird. Hierbei ist die minimale Öffnungsdauer ti_D_min experimentell, vorzugsweise in Abhängigkeit vom Ventiltyp und/oder in Abhängigkeit von den Bedingungen im Abgasbereich 13 zu ermitteln. Die vorzugebende minimale Öffnungsdauer ti_D_min ist im allgemeinen länger als die technisch bedingte minimale Öffnungsdauer des Dosierventils 22. Die minimale Öffnungsdauer ti_D_min wird beispielsweise auf 5 Millisekunden festgelegt, während die technische bedingte minimale Öffnungsdauer eines Kraftstoff-Einspritzventils, beispielsweise eines gängigen Benzin-Einspritzventils, bei beispielsweise 1 Millisekunde liegen kann.

Gemäß einer einfachen Ausführung wird die minimale vorzugebende Öffnungsdauer ti_D_min gleich der minimalen Einschaltdauer ti_D_min des Elektromagneten 23 festgelegt. Zwischen dem Beginn der Einschaltdauer ti_E_var des Elektromagneten 23 zum ersten Zeitpunkt ti1 und dem vollständigen Öffnen des Dosierventils 22 zum zweiten Zeitpunkt ti2 liegt die Dosierventil-Ansprechzeit ti_Ans. Da die Ansprechzeit ti_Ans bei der minimalen vorgegebenen Öffnungsdauer ti_D_min bereits einen merklichen Anteil an der Öffnungsdauer ti_D haben kann, wird die Dosierventil-Ansprechzeit ti_Ans vorzugsweise berücksichtigt. Die Vorgehensweise zur Ermittlung der Ansprechzeit ti_Ans ist aus dem eingangs genannten Stand der Technik gemäß DE 34 26 799 C2 ersichtlich. Die vorgegebene minimale Öffnungsdauer ti_D_min wird in diesem Fall ab dem zweiten Zeitpunkt ti2 gezählt und endet zum dritten Zeitpunkt ti3. Die nächste vorgegebene minimale Öffnungsdauer ti_D_min beginnt zum achten Zeitpunkt ti8 und endet zum zehnten Zeitpunkt ti10.

Durch die Vorgabe der minimalen Öffnungsdauer ti_D_min kann bei einem sehr kleinen Tastverhältnis, beispielsweise unterhalb von 5 Prozent, die konstante Periodendauer ti_PR_con nicht länger aufrechterhalten werden. Um das Tastverhältnis auf kleine Werte einstellen zu können, ist deshalb vorgesehen, die Periodendauer des impulsbreitenmodulierten Signals als variable Periodendauer ti_PR_var auszugestalten. Hierbei tritt dann die variable Ausschaltdauer ti_A_var auf, die zum ersten Zeitpunkt ti1 beginnt und zum siebten Zeitpunkt ti7 endet.

Anhand von Versuchen wurde festgestellt, dass die Ausbildung des Sprühnebels vom Betriebsdruck p des Reagenzmittels abhängt. Gemäß einer vorteilhaften Ausgestaltung ist deshalb vorgesehen, die minimale Öffnungsdauer ti_D_min in Abhängigkeit vom Betriebsdruck p des Reagenzmittels festzulegen.

Die Betriebspannung u, mit welcher der Elektromagnet 23 des Dosierventils 22 betrieben wird, hat im Zusammenhang mit dem Innenwiderstand des Elektromagneten 23 einen Einfluss auf die Ansprechzeit ti_Ans. Gemäß einer vorteilhaften Ausgestaltung ist deshalb vorgesehen, die Betriebspannung u bei der Festlegung der minimalen Öffnungsdauer ti_D_min zu berücksichtigen.

Weiterhin wurde anhand von Versuchen festgestellt, dass die Ausbildung des Sprühnebels vom Abgas-Massenstrom ms_Abg, von der Abgastemperatur te_Abg, vom Abgasgegendruck und von der Betriebstemperatur des Dosierventils 22 abhängt.

Vorteilhafter Weise werden deshalb bei der Festlegung der minimalen Öffnungsdauer ti_D_min der Abgas-Massenstrom ms_Abg und/oder die Abgastemperatur te_Abg und/oder die Dosierventil-Betriebstemperatur te_DV berücksichtigt.

Der Abgas-Massenstrom ms_Abg kann von einer nicht näher gezeigten Abgas-Massenstrom-Ermittlung anhand zumindest des Luftsignals ms_L und gegebenenfalls der Drehzahl n und gegebenenfalls dem Maß Md für die Last berechnet werden. Die Abgastemperatur te_Abg kann ebenfalls aus dem Luftsignal ms_L und dem Maß Md für die Last der Brennkraftmaschine 10 wenigstens näherungsweise berechnet werden. Im gezeigten Ausführungsbeispiel stellt der Abgas-Temperatursensor 15 die gemessene Abgastemperatur te_Abg_Mes bereit. Die Betriebstemperatur des Dosierventils 22 kann beispielsweise aus dem Innenwiderstand des Elektromagneten 23 wenigstens näherungsweise berechnet werden.

Mit diesen Maßnahmen ist es daher möglich, die unterschiedlichsten Einflüsse auf die Dosierventil-Ansprechzeit ti_Ans zu berücksichtigen, um die minimale Öffnungsdauer ti_D_min möglichst korrekt vorgeben zu können.

## Patentansprüche

1. Verfahren zum Betreiben eines Dosierventils (22), das als Magnetventil realisiert ist, welches von einem Elektromagneten (23) betätigt wird, welcher mit einem mit einer Ventilnadel fest verbundenen Anker zusammenwirkt, welcher weiterhin mit einem impulsbreitenmodulierten Dosiersignal (s_DV) beaufschlagt wird, das die Dosierung eines in den Abgasbereich (13) einer Brennkraftmaschine (10) zu dosierenden Reagenzmittels oder einer Vorstufe eines Reagenzmittels festlegt, **dadurch gekennzeichnet, dass** die Öffnungsdauer (ti_D) des Dosierventils (22) auf eine minimale Öffnungsdauer (ti_D_min) begrenzt wird, bei welcher das Dosierventil (22) vollständig geöffnet ist, die derart festgelegt ist, dass bei der Dosierung ein Sprühnebel entsteht, wobei keine Tröpfchen entstehen, die teilweise am Dosierventil (22) verbleiben.

2. Verfahren nach Anspruch 1, **dadurch gekennzeichnet, dass** die minimale Öffnungsdauer (ti_D_min) in Abhängigkeit vom Betriebsdruck (p) des Reagenzmittels festgelegt wird.

3. Verfahren nach Anspruch 1, **dadurch gekennzeichnet, dass** die minimale Öffnungsdauer (ti_D_min) in Abhängigkeit von der Betriebspannung (u) des Elektromagneten (23) festgelegt wird.

4. Verfahren nach Anspruch 1, **dadurch gekennzeichnet, dass** die minimale Öffnungsdauer (ti_D_min) in Abhängigkeit von einem Maß für die Abgastemperatur (te_Abg) und/oder einem Maß für den Abgas-Massenstrom (ms_Abg) und/oder einem Maß für den Abgasgegendruck und/oder einem Maß für die Betriebstemperatur (te_DV) des Dosierventils (22) und/oder des Reagenzmittels festgelegt wird.

5. Verfahren nach Anspruch 1, **dadurch gekennzeichnet, dass** der Beginn der Öffnungsdauer (ti_D) zu einem bestimmten Zeitpunkt (ti2, ti6, ti8) anhand einer Induktivitäts-Änderung des Elektromagneten (22) ermittelt wird.

6. Verfahren nach Anspruch 5, **dadurch gekennzeichnet, dass** die Induktivitäts-Änderung durch eine Bewertung des durch den Elektromagneten (22) fließenden Stroms (i) ermittelt wird.

7. Vorrichtung zum Betreiben eines Dosierventils (22), **dadurch gekennzeichnet, dass** ein speziell hergerichtetes Steuergerät (20) vorgesehen ist, das alle Schritte des Verfahrens nach einem der Ansprüche 1 bis 6 ausführt.

8. Vorrichtung nach Anspruch 7, **dadurch gekennzeichnet, dass** das Dosierventil (22) ein Kraftstoff-Einspritzventil ist.

9. Vorrichtung nach Anspruch 7, **dadurch gekennzeichnet, dass** als Vorstufe eines Reagenzmittels eine Harnstoff-Wasser-Lösung vorgesehen ist.

10. Computerprogramm, das alle Schritte eines Verfahrens nach einem der Ansprüche 1 bis 6 ausführt, wenn es auf einem Computer abläuft.

11. Computerprogrammprodukt mit einem auf einem maschinenlesbaren Träger gespeicherten Programmcode zur Durchführung des Verfahrens nach einem der Ansprüche 1 bis 6, wenn das Programm auf einem Computer oder im Steuergerät (20) ausgeführt wird.

## Claims

1. Method for operating a metering valve (22) which is implemented as a solenoid valve and is activated by a solenoid (23) which interacts with an armature which is permanently connected to a valve needle and to which a pulse-width-modulated metering signal (s_DV) is also applied, which metering signal (s_DV) defines the metering of a reagent which is to be metered into the exhaust gas region (13) of an internal combustion engine (10), or of a precursor of a reagent, **characterized in that** the opening period (ti_D) of the metering valve (22) is limited to a minimum opening period (ti_D_min) during which the metering valve (22) is completely opened and which is defined such that during the metering a spray mist is produced, wherein no droplets which partially remain on the metering valve (22) are produced.

2. Method according to Claim 1, **characterized in that** the minimum opening period (ti_D_min) is defined as a function of the operating pressure (p) of the reagent.

3. Method according to Claim 1, **characterized in that** the minimum opening period (ti_D_min) is defined as a function of the operating voltage (u) of the solenoid (23).

4. Method according to Claim 1, **characterized in that** the minimum opening period (ti_D_min) is defined as a function of a measure of the exhaust gas temperature (te_Abg) and/or a measure of the exhaust gas mass flow (ms_Agb) and/or a measure of the exhaust gas counter-pressure and/or a measure of the operating temperature (te_DV) of the metering valve (22) and/or of the reagent.

5. Method according to Claim 1, **characterized in that** the start of the opening period (ti_D) is determined at a certain time (ti2, ti6, ti8) on the basis of an inductive change in the electromagnet (23).

6. Method according to Claim 5, **characterized in that** the change in inductance is determined by evaluation of the current (i) flowing through the electromagnet (23).

7. Apparatus for operating a metering valve (22), **characterized in that** a specially configured control unit (20) is provided which carries out all the steps of the method according to one of Claims 1 to 6.

8. Apparatus according to Claim 7, **characterized in that** the metering valve (22) is a fuel injection valve.

9. Apparatus according to Claim 7, **characterized in that** a urea/water solution is provided as a precursor of a reagent.

10. Computer program which carries out all the steps of a method according to one of Claims 1 to 6 when it runs on a computer.

11. Computer program product having a program code which is stored on a machine-readable carrier and has the purpose of carrying out the method according to one of Claims 1 to 6 when the program is executed on a computer or in the control unit (20).

## Revendications

1. Procédé pour faire fonctionner une soupape de dosage (22), qui est réalisée sous forme d'électrovanne, qui est commandée par un électroaimant (23), qui coopère avec une armature connectée fixement à une aiguille de soupape, qui est en outre sollicitée avec un signal de dosage à modulation de largeur d'impulsion (s_DV) qui établit le dosage d'un réactif ou d'un précurseur de réactif à doser dans la région de l'échappement (13) d'un moteur à combustion interne (10), **caractérisé en ce que** la durée d'ouverture (ti_D) de la soupape de dosage (22) est limitée à une durée d'ouverture minimale (ti_D_min), à laquelle la soupape de dosage (22) est complètement ouverte, qui est établie de telle sorte que lors du dosage, il se produise un brouillard de pulvérisation et qu'aucune gouttelette ne subsiste partiellement sur la soupape de dosage (22).

2. Procédé selon la revendication 1, **caractérisé en ce que** la durée d'ouverture minimale (ti_D_min) est établie en fonction de la pression de fonctionnement (p) du réactif.

3. Procédé selon la revendication 1, **caractérisé en ce que** la durée d'ouverture minimale (ti_D_min) est établie en fonction de la tension de fonctionnement (u) de l'électroaimant (23).

4. Procédé selon la revendication 1, **caractérisé en ce que** la durée d'ouverture minimale (ti_D_min) est établie en fonction d'une mesure de la température du gaz d'échappement (te_Abg) et/ou d'une mesure du débit massique de gaz d'échappement (ms_Abg) et/ou d'une mesure de la contre-pression de gaz d'échappement et/ou d'une mesure de la température de fonctionnement (te_DV) de la soupape de dosage (22) et/ou du réactif.

5. Procédé selon la revendication 1, **caractérisé en ce que** le début de la durée d'ouverture (ti_D) est déterminé à un instant particulier (ti2, ti6, ti8), à l'aide d'une variation d'inductivité de l'électroaimant (23).

6. Procédé selon la revendication 5, **caractérisé en ce que** la variation d'inductivité est déterminée par une analyse du flux (i) s'écoulant à travers l'électroaimant (23).

7. Dispositif pour faire fonctionner une soupape de dosage (22), **caractérisé en ce que** l'on prévoit un appareil de commande (20) conçu spécialement, qui met en oeuvre toutes les étapes du procédé selon l'une quelconque des revendications 1 à 6.

8. Dispositif selon la revendication 7, **caractérisé en ce que** la soupape de dosage (22) est une soupape d'injection de carburant.

9. Dispositif selon la revendication 7, **caractérisé en ce que** l'on prévoit en tant que précurseur d'un réactif une solution aqueuse d'urée.

10. Programme informatique, qui exécute toutes les étapes d'un procédé selon l'une quelconque des revendications 1 à 6, lorsqu'il tourne sur un ordinateur.

11. Produit de programme informatique comprenant un code programme mémorisé sur un support lisible en machine pour mettre en oeuvre le procédé selon l'une quelconque des revendications 1 à 6, quand le programme est exécuté sur un ordinateur ou dans l'appareil de commande (20).
